Europäisches Patentamt

(19) European Patent Office

Office européen des brevets

(11) **EP 0 501 003 B1**

(12) **EUROPEAN PATENT SPECIFICATION**

(45) Date of publication and mention
of the grant of the patent:
**20.03.1996 Bulletin 1996/12**

(51) Int. Cl.$^6$: **B01D 53/66**

(21) Application number: **91113995.4**

(22) Date of filing: **21.08.1991**

(54) **Catalyst and method for decomposing ozone by the use thereof**

Katalysator und Methode zum Zersetzen von Ozon durch seine Verwendung

Catalyseur et méthode pour décomposer de l'ozone par son utilisation

(84) Designated Contracting States:
**DE FR GB**

(30) Priority: **28.02.1991 JP 120655/91**
**07.05.1991 JP 198971/91**

(43) Date of publication of application:
**02.09.1992 Bulletin 1992/36**

(73) Proprietor: **SAKAI CHEMICAL INDUSTRY CO.,**
**LTD.,**
**Sakai-shi, Osaka 590 (JP)**

(72) Inventors:
• **Yoshimoto, Masafumi**
**Sakai-shi, Osaka 590 (JP)**
• **Nakatsuji, Tadao**
**Kitakatsuragi-gun, Nara 639-02 (JP)**
• **Nagano, Kazuhiko**
**Sakai-shi, Osaka 591 (JP)**
• **Yoshida, Kimihiko**
**Sakai-shi, Osaka 590-01 (JP)**

(74) Representative: **Hansen, Bernd, Dr. Dipl.-Chem. et**
**al**
**Hoffmann, Eitle & Partner**
**Patent- und Rechtsanwälte,**
**Postfach 81 04 20**
**D-81904 München (DE)**

(56) References cited:
**EP-A- 0 371 740          EP-A- 0 398 765**
**EP-A- 0 398 766**

• **PATENT ABSTRACTS OF JAPAN vol. 7, no. 91 (C-162)(1236) 15 April 1983**
• **PATENT ABSTRACTS OF JAPAN vol. 7, no. 131 (C-169)(1276) 8 June 1983**

Remarks:
The file contains technical information submitted
after the application was filed and not included in this
specification

**Description**

BACKGROUND OF THE INVENTION

The present invention relates to a catalyst for decomposing and removing ozone contained in gas or the like.

Examples of a conventional method for removing the harmful ozone contained in the gas, include (i) an adsorbing method using a porous substance such as a catalytic active substance or ozone adsorption substance, zeolite or the like and (ii) an oxidizing and decomposing method using a catalyst such as $MnO_2$.

However, any of the conventional decomposing methods above mentioned does not fully achieve a satisfactory decomposing. More specifically, in the adsorbing method, an adsorbent needs to be regenerated or exchanged since its adsorbing ability expires in a limited period of time. This presents the problem that a removing apparatus requires much labor and expense for maintenance.

The oxidizing and decomposing method using the catalyst includes no such problems as above mentioned, but does not fully achieve satisfactory decomposing in view of catalyst performance. In addition, the performance is initially good but is deteriorated with the passage of time during reaction.

The present inventors have variously investigated the reaction for oxidizing and decomposing ozone. As a result, the following has been found. Since the rate determining step of reaction is a step of diffusion in the solid, the reaction proceeds only on a catalyst surface. Consequently, it is most preferable that catalytic constitution is coating-typed in which catalytic active components are carried on the catalytic surface and the vicinity thereof. However, in the case where a honeycomb constitution is used for a carrier, cells of the constitution are easily plugged by the catalytic active components to be coated as the number of cells / inch$^2$ is increased. Consequently, there is caused the problem that the low-pitch honeycomb type catalyst for decomposing ozone, which has great number of cells / inch$^2$, is poor in productivity.

EP-A-0 398 765 and EP-A-0 398 766 each disclose ozone decomposition reactor elements comprising a substrate including an ozone decomposition catalyst and electrodes attached to the catalyst structure for elevating its temperature to aid in the decomposition of ozone.

Accordingly, it is a main object of the present invention to provide a catalyst for decomposing ozone which is superior to the conventional method in ability of removing ozone by an oxidizing and decomposing method.

It is another object of the present invention to provide a catalyst for decomposing ozone which has good durability for a long time.

It is yet another object of the present invention to provide a catalyst for decomposing ozone having high productivity even if the carrier is low pitch honeycomb-type.

SUMMARY OF THE INVENTION

The present invention provides a catalyst comprising a carrier which contains at least 10% by weight of either an ozone adsorbing substance or a catalytically active substance (I) capable of decomposing ozone, and a layer of a catalytically active substance (II) capable of decomposing ozone, coated on the carrier with a thickness of 5-100 μm.

The catalytically active substances (I) and (II) may be the same or different.

The above catalyst is obtainable by dipping a honeycomb type carrier containing either an ozone adsorbing substance or a catalytically active substance (I) capable of decomposing ozone in a diluted or undiluted slurry which contains a catalytically active substance (II) capable of decomposing ozone, so that a layer of the catalytically active substance (II) is coated on the surface of the honeycomb type carrier with a thickness of 5 to 100 μm.

More specifically, the catalytic active substance capable of decomposing ozone or ozone adsorption substance is contained in the carrier so that the ability to decompose ozone or ozone adsorbing ability is given to the carrier itself. Thus, the thickness of the catalytic active substance to be carried on the carrier can be reduced. Accordingly, since the active component of the catalyst for decomposing ozone has a small coating thickness, it is excellent in the production of the low pitch honeycomb type catalyst. In addition, the catalyst for decomposing ozone according to the present invention has good durability and performance for a long time.

As described above, the catalyst for decomposing ozone according to the present invention has an effect that ozone can effectively be removed.

BRIEF DESCRIPTION OF THE DRAWINGS

Figure 1 is a section view of a honeycomb type catalyst; and
Figure 2 is a flowsheet of a catalyst activity test.

## DETAILED DESCRIPTION OF THE INVENTION

Examples of the catalytic active substances to be used include at least one of metals such as Ti, Cu, Mn, Ni, Fe, Ag, Au Mo, Zr, Sn, Nb, W or the like, metal oxide, metal sulfate. Activated carbon or acid may be mixed with the metal, metal oxide or metal sulfate as mentioned above. Examples of metal oxide are $MnO_2$, NiO, CuO, $Fe_2O_3$, a binary-catalyst type such as $MnO_2$-$TiO_2$, $MnO_2$-$SiO_2$, $MnO_2$-$WO_3$, $MnO_2$-$V_2O_5$, CuO-$TiO_2$, $Co_3O_4$-$TiO_2$, $Fe_2O_3$-$TiO_2$, $Fe_2O_3$-Au, $MnO_2$-$Ag_2O$, $MnO_2$-CuO, $MnO_2$-$Fe_2O_3$, NiO-$Co_3O_4$, NiO-$TiO_2$, NiO-$MnO_2$, NiO-$MnO_2$, NiO-$Ag_2O$, NiO-$MoO_3$, NiO-$WO_3$, NiO-$SnO_2$ or the like, a ternary-catalyst type such as $MnO_2$-$Co_3O_4$-$TiO_2$, $MnO_2$-$Co_3O_4$-$Ag_2O$, NiO-$MnO_2$-$TiO_2$, $MnO_2$-$WO_3$-$TiO_2$, $MnO_2$-$MoO_3$-$TiO_2$, $MnO_2$-$V_2O_5$-$TiO_2$, $MnO_2$-$Ag_2O$-$TiO_2$, $MnO_2$-CuO-$Ag_2O$, NiO-$MnO_2$-$Ag_2O$, NiO-$MnO_2$-$TiO_2$ or the like, $MnO_2$- (alkali metal and/or alkali earth metal oxide), or a zeolite catalyst type carrying metal of which oxide formation enthalpy is 419 kJ/g (100 Kcal/g) oxygen atom or less.

The catalytic active substance of the present invention is not limited to the foregoing. The most effective catalyst is a silver type such as $MnO_2$-$Ag_2O$, $MnO_2$-$Ag_2O$-$TiO_2$, $MnO_2$-$Ag_2O$-$TiO_2$-$SiO_2$, $MnO_2$-$Ag_2O$-$TiO_2$-$Al_2O_3$, $Ag_2O$-$TiO_2$, $Ag_2O$-$Al_2O_3$ or the like.

As a carrier for carrying the active substance, corrugated honeycomb made of ceramic fiber, cordierite honeycomb, or moldings having various shapes and made of clay or the like can be used. The carrier is not particularly limited in shape, but may be in any form such as honeycomb, pellet, cylinder, pipe or the like. The carrier containing the catalytic active substance or ozone adsorption substance can be produced mainly by a kneading method.

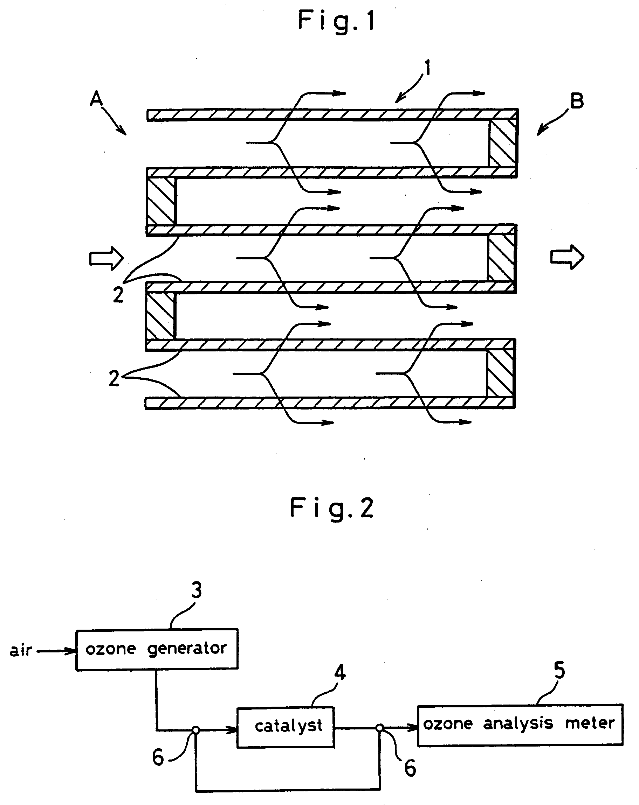

The honeycomb type catalyst has a so-called catalytic filter constitution, for example, as shown in Fig. 1. The honeycomb type catalyst is formed by carrying the catalytic active substance on a honeycomb structure 1. The honeycomb structure 1 is made of ceramic in which openings of a gas inlet A and a gas outlet B are alternately blocked. Walls 2 of the honeycomb structure 1 are made of porous ceramic having permeability. Consequently, the gas introduced from the inlet A into the filter (as shown by an arrow) is forcibly passed through the walls 2 and is then discharged from the outlet B. The opening is not particularly limited in shape, but may be in any form such as hexagon, circle, quadrangle, triangle or the like.

There may be added (i) a forming assistant such that the carrier easily gets into shape, or (ii) a reinforcing agent such as inorganic fiber or an organic binder to improve the mechanical strength or the like.

The content of the catalytic active substance or ozone adsorption substance contained in the carrier is preferably in the range from 10 to 80 % by weight, more preferably in the range from 20 to 50 % by weight. If the content of the catalytic active substance or ozone adsorption substance is smaller than 10 % by weight, the ozone resolvability or ozone adsorbing ability of the carrier is considerably lowered. Consequently, it is necessary to increase the coating thickness of the catalytic active substance so as to obtain high resolvability. Examples of the preferred catalytic active substance to be contained in the carrier are $MnO_2$, NiO, CuO, $Ag_2O$ and the like. Examples of the ozone adsorption substance having ozone adsorbing ability are activated carbon, zeolite and the like. Referring to the present invention, the catalytic active substance and ozone adsorption substance may be contained in the carrier separately or in mixture.

The catalytic active substance can be carried on the carrier by, for example, a wash coat method wherein a slurry of the catalytic active substance is adhered onto the surface of the carrier by dipping the carrier in the slurry and dried out. The carrier containing the catalytic active substance or ozone adsorption substance carries the catalytic active substance at a coating thickness of 5 to 100 $\mu$m, preferably 10 to 50 $\mu$m. If the coating thickness is not greater than 5 $\mu$m, decomposing activity is lowered. If the coating thickness exceeds 100 $\mu$m, the decomposing activity is not improved so that only a pressure loss is increased.

The reaction temperature at the time of decomposing ozone is preferably in the range from 0 to 40°C and more preferably in the range from 10 to 30°C. The temperature less than 0°C causes the reaction velocity to be slower, while the temperature exceeding 40°C requires an additional energy for increasing the temperature, resulting in poor economy.

Preferably, the catalyst comes in contact with the reaction gas in the range of area velocity (AV) from 5 to 70. The area velocity less than 5 requires a greater amount of catalyst, while the area velocity exceeding 50 causes the decomposition rate to be lowered, failing to achieve the desired decomposition rate. It is here noted that the area velocity refers to a value obtained by dividing the reaction amount ($Nm^3/h$) by the gas-catalyst contacting area per catalyst in unit volume ($m^2/m^3$).

## EXAMPLES

The following description will discuss, in more detail, examples of the present invention. It is noted that the present invention should not be limited to the following examples.

Catalyst Activity Test

Catalyst activity was measured using the test method having a flowsheet as shown in Fig. 2, under test conditions discussed later.

In Fig. 2, an ozone generator is indicated at 3. The ozone generator 3 generates ozone at suitable temperature by means of the air introduced thereinto. The air containing ozone is led to a catalyst 4. The ozone decomposition rate can be found by the values of the inlet and outlet of the catalyst obtained by an ozone analysis 5 in accordance with the following formula. A three way cock is indicated at 6.

$$\text{Ozone decomposition rate (\%)} = \frac{\text{inlet ozone concentration - outlet ozone concentration}}{\text{inlet ozone concentration}} \times 100$$

(Test Conditions)

Space velocity : 20,000 / h
Reaction temperature : 20°C

Example 1

Gairome clay was dried for 18 hours at 100°C, and then was crushed by a sample mill whose screen has holes of 0.5 mm diameter. 8 kg of the crushed products and 2 kg of active carbon were mixed with 0.8 kg of methyl cellulose type binder (Yuken Industry Co., YB-32) and water. The mixture was kneaded thoroughly by a kneader. After that, the mixture was put into an auger screw type extruder to which a honeycomb extruding die is attached, so that the honeycomb was obtained. The obtained honeycomb was air-dried at ordinary temperature, and it was heated up to 500°C, at the rate of 5°C by a hour in $N_2$ current. After it keeps 500°C for 3 hours, it was cooled down at the rate of 10°C by a hour. Thus, the honeycomb type carrier having open area rate of 64 % and pitch of 1.0 mm was obtained. On the other hand, 1kg of $MnO_2$ having a specific surface area of 67 m²/g was added to 500 ml of water and a small amount of binder. To the mixture, 250 g of glass bead was added. The resultant mixture was agitated and mixed for 30 minutes. The glass bead was apart from the mixture to produce a slurry. After the slurry was diluted with 300 ml of water, in the slurry was dipped the honeycomb type carrier cut off at a suitable dimension. The exceeded slurry was excluded from the honeycomb type carrier, and the honeycomb type carrier was dried. Thus, there was prepared a catalyst carrying 31 µm in average thickness of $MnO_2$. The thickness of the carried $MnO_2$ layer gas calculated by obtaining its average value according to EPMA linear analysis on the assumption that the number of n is 10. The thickness was obtained by the same method in the following Examples and Reference Example.

Example 2

There was prepared a catalyst carrying $MnO_2$-$TiO_2$ (weight ratio of 80 : 20) in the same manner as that of Example 1, except that 800g of $MnO_2$, 200 g of $TiO_2$ and 500 ml of diluting water were used in Example 2, instead of 1 kg of $MnO_2$ and 300 ml of diluting water used in Example 1. Thus, there were obtained five kinds of catalysts having coating thicknesses of 4 µm, 8 µm, 13 µm, 25 µm and 38 µm by adjusting the number of coatings.

Example 3

There was prepared a catalyst carrying in average thickness of 43 µm of $MnO_2$-$Ag_2O$ (weight ratio of 90 : 10) in the same manner as that of Example 1, except that 900 g of $MnO_2$ and 100 g of $Ag_2O$ were used in Example 3, instead of 1kg of $MnO_2$ used in Example 1.

Example 4

There was prepared a honeycomb type carrier in the same manner as that of Example 1, except that 5 kg of the crushed Gairome clay, 5kg of active carbon and 1 kg of methyl cellulose type binder (Yuken Industry Co., YB-32) were used in Example 4. The carrier was treated by the same slurry as used in Example 2. Thus, there were prepared five kinds of catalysts having the coating thicknesses of 5 µm, 10 µm, 18 µm, 29 µm and 43 µm by adjusting the number of coatings.

Example 5

There was prepared a catalyst carrying 50 µm in average thickness of $MnO_2$-$Fe_2O_3$-$Ag_2O$ (weight ratio of 50 : 40 : 10) in the same manner as that of Example 1, except that 400 g of $Fe_2O_3$ having a specific surface area of 38 m²/g, 100 g of $Ag_2O$ and 500 g of $MnO_2$ were used in Example 5, instead of 1 kg of $MnO_2$ used in Example 1.

Example 6

There was prepared a catalyst carrying 38 μm in average thickness of $MnO_2$ - active carbon - $TiO_2$ (weight ratio of 70 : 20 : 10) in the same manner as that of Example 1, except that 200 g of active carbon (Takeda Pharmaceutical Co., "Shirasagi A"), 100 g of $TiO_2$ and 700 g of $MnO_2$ were used, instead of 1 kg of $MnO_2$ used in Example 1.

Example 7

There was prepared a catalyst carrying 49 μm in average thickness of CuO in the same manner as that of Example 1, except that CuO having a specific surface area of 55 $m^2/g$ was used, instead of $MnO_2$ used in Example 1.

Example 8

There was prepared a catalyst carrying 57 μm in average thickness of $MnO_2$ in the same manner as that of Example 4, except that 18 kg of Gairome clay and 2 kg of active carbon were used when extruding and molding a carrier.

Reference Example

30 g of $MnO_2$ having a specific surface area of 48 $m^2/g$ and 70 g of a mixture of titanium tetrachloride with a silica sol ($TiO_2$ : $SiO_2$ = 1 : 1) were agitated and mixed. While agitating and mixing, ammonia gas was blown such that the resultant mixture was neutralized, thereby to produce a slurry like precipitate. After sufficiently to produce a slurry like precipitate. After sufficiently washed with water, the precipitate was then calcined for 3 hours at 500°C and milled. Thus, there was prepared the powder of a ternary-catalyst $MnO_2$-$TiO_2$-$SiO_2$ (weight ratio of 35 : 30 : 35) having a specific surface area of 162 $m^2/g$. There was prepared a ternary-catalyst carrying $SiO_2$-$MnO_2$-$TiO_2$ (weight ratio of 35 : 30 : 35) with the carry rate of 99 % by using the powder in the same manner as that of Example 1.

<u>Catalyst</u> <u>Activity</u> <u>Test</u>

Each catalyst of Examples 1 to 8 and Reference Example was submitted to a catalyst activity test in accordance with the Catalyst Activity Test described above. There were obtained ozone decomposition rates initially, after 10 hours and after 100 hours. The test conditions are as follows.

(Test Conditions)

Space velocity : 20,000 / h
Inlet ozone concentration : 10 ppm
Reaction temperature : 20°C

The test results are shown in Table 1.

Table 1

| | Catalyst | | Coating thickness ($\mu$m) | Ozone decomposition rate (%) | | |
| | Coating layer | Carrier | | Initial | After 10 hours | After 100 hours |
|---|---|---|---|---|---|---|
| Example 1 | $MnO_2$ | Active carbon/clay = 20/80 | 36 | 99.7 | 99.6 | 96.7 |
| Example 2 | $MnO_2/TiO_2$ | Active carbon/clay = 20/80 | 4 | 87.3 | 85.4 | 80.5 |
| | | | 8 | 99.1 | 97.3 | 93.2 |
| | | | 13 | 99.5 | 99.3 | 98.0 |
| | | | 25 | 99.8 | 99.7 | 98.6 |
| | | | 38 | 99.8 | 99.8 | 98.9 |
| Example 3 | $MnO_2/Ag_2O$ | Active carbon/clay = 20/80 | 43 | 99.8 | 99.8 | 99.2 |
| Example 4 | $MnO_2/TiO_2$ | Active carbon/clay = 50/50 | 5 | 91.2 | 90.3 | 85.6 |
| | | | 10 | 99.6 | 99.6 | 95.3 |
| | | | 18 | 99.8 | 99.8 | 98.8 |
| | | | 29 | 99.9 | 99.9 | 99.3 |
| | | | 43 | 99.9 | 99.9 | 99.5 |

Table 1 (continued)

| | Catalyst | | Coating thickness ($\mu$m) | Ozone decomposition rate (%) | | |
|---|---|---|---|---|---|---|
| | Coating layer | Carrier | | Initial | After 10 hours | After 100 hours |
| Example 5 | $MnO_2/Fe_2O_3/Ag_2O$ | Active carbon/clay = 20/80 | 50 | 99.7 | 90.5 | 81.1 |
| Example 6 | $MnO_2$/active carbon/$TiO_2$ | Active carbon/clay = 20/80 | 38 | 99.9 | 99.9 | 99.5 |
| Example 7 | CuO | Active carbon/clay = 20/80 | 49 | 89.2 | 86.1 | 70.2 |
| Example 8 | $MnO_2$ | Active carbon/clay = 10/90 · | 57 | 96.3 | 94.3 | 86.3 |
| Reference Example | $MnO_2/TiO_2/SiO_2$ | | -- | 86.8 | 72.1 | 55.6 |

EP 0 501 003 B1

Example 9

Kibushi clay was dried for 18 hours at 100°C, and then was crushed by a sample mill whose screen has holes of 0.5 mm diameter. 8 kg of the crushed products and $MnO_2$ having a specific area of 67 $m^2/g$ were mixed with 0.8 kg of methyl cellulose type binder (Yuken Industry Co., YB-32) and water. The mixture was kneaded thoroughly by a kneader. After that, the mixture was put into an auger screw type extruder to which a honeycomb extruding die is attached, so that the honeycomb was obtained. The obtained honeycomb was air-dried at ordinary temperature, and it was heated up to 500°C at the rate of 5°C by a hour in $N_2$ current. After it keeps 500°C for 3 hours, it was cooled down at the rate of 10°C by a hour. Thus, the honeycomb type carrier having open area rate of 64 % and pitch of 1.0 mm was obtained. 1kg of $MnO_2$ having a specific surface area of 67 $m^2/g$ was added to 500 ml of water and a small amount of binder. To the mixture, 250 g of glass bead was added. The resultant mixture was agitated and mixed for 30 minutes. The glass bead was apart from the mixture to produce a slurry. After the slurry was diluted with 300 ml of water, in the slurry was dipped the honeycomb type carrier cut off at a suitable dimension. The exceeded slurry was excluded from the carrier, and the carrier was dried. Thus, there was prepared a catalyst carrying 38 $\mu$m in average thickness of $MnO_2$. The thickness of the carried $MnO_2$ layer was calculated by obtaining its average value according to EPMA linear analysis on the assumption that the number of n is 10. The thickness was obtained by the same method in the following Examples and Reference Example.

Example 10

There was prepared a catalyst carrying $MnO_2$-$TiO_2$ (weight ratio of 80 : 20) in the same manner as that of Example 9, except that 800 g of $MnO_2$, 200 g of $TiO_2$ and 500 ml of diluting water were used, instead of 1 kg of $MnO_2$ and 300 ml of diluting water used in Example 9. Thus, there were obtained five kinds of catalysts having coating thicknesses of 6 $\mu$m, 10 $\mu$m, 15 $\mu$m, 30 $\mu$m, and 42 $\mu$m by adjusting the number of coatings.

Example 11

There was prepared a catalyst carrying in average thickness of 47 $\mu$m of $MnO_2$-$Ag_2O$ (weight ratio of 90 : 10) in the same manner as that of Example 9, except that 900 g of $MnO_2$ and 100 g of $Ag_2O$ were used, instead of 1kg of $MnO_2$ used in Example 9.

Example 12

There was prepared a honeycomb type carrier in the same manner as that of Example 9, except that 5 kg of the crushed Kibushi clay, 5 kg of $MnO_2$, 1kg of methyl cellulose type binder (Yuken Industry Co., YB-32) were used. The carrier was treated by the same slurry as used in Example 10. Thus, there were prepared five kinds of catalysts having the coating thicknesses of 5 $\mu$m, 11 $\mu$m, 20 $\mu$m, 33 $\mu$m and 45 $\mu$m by adjusting the number of coatings.

Example 13

There was prepared a catalyst carrying 51 $\mu$m in average thickness of $MnO_2$-$Fe_2O_3$-$Ag_2O$ (weight ratio of 50 : 40 : 10) in the same manner as that of Example 9, except that 400 g of $Fe_2O_3$ having a specific surface area of 38 $m^2/g$, 100 g of $Ag_2O$ and 500 g of $MnO_2$ were used, instead of 1 kg of $MnO_2$ used in Example 9.

Example 14

There was prepared a catalyst carrying 38 $\mu$m in average thickness of $MnO_2$ - active carbon - $TiO_2$ (weight ratio of 70 : 20 : 10) in the same manner as that of Example 9, except that 200 g of active carbon (Takeda Pharmaceutical Co., "Shirasagi A"), 100 g of $TiO_2$ and 700 g of $MnO_2$ were used, instead of 1 kg of $MnO_2$ used in Example 9.

Example 15

There was prepared a catalyst carrying 45 $\mu$m in average thickness of CuO in the same manner as that of Example 9, except that CuO having a specific surface area of 55 $m^2/g$ was used, instead of $MnO_2$ used in Example 9.

Example 16

There was prepared a catalyst carrying 57 µm in average thickness of $MnO_2$ in the same manner as that of Example 12, except that 18 kg of Kibushi clay and 2 kg of active carbon were used when extruding and molding a carrier in Example 12.

Catalyst Activity Test

Each catalyst of Examples 9 to 16 was submitted to a catalyst activity test in the same manner as in Examples 1 to 8. The test results are shown in Table 2.

Table 2

| Example | Catalyst | | Coating thickness ($\mu$m) | Ozone decomposition rate (%) | | |
|---|---|---|---|---|---|---|
| | Coating layer | Carrier | | Initial | After 10 hours | After 100 hours |
| Example 9 | $MnO_2$ | $MnO_2$/clay = 20/80 | 38 | 99.7 | 99.5 | 97.1 |
| Example 10 | $MnO_2$/$TiO_2$ | $MnO_2$/clay = 20/80 | 6 | 85.9 | 81.6 | 73.1 |
| | | | 10 | 98.9 | 96.2 | 90.5 |
| | | | 15 | 99.5 | 99.3 | 97.7 |
| | | | 30 | 99.8 | 99.7 | 98.5 |
| | | | 42 | 99.8 | 99.8 | 98.9 |
| Example 11 | $MnO_2$/$Ag_2O$ | $MnO_2$/clay = 20/80 | 47 | 99.8 | 99.8 | 99.2 |

Table 2 (continued)

| Catalyst | | Coating thickness (μm) | Ozone decomposition rate (%) | | |
|---|---|---|---|---|---|
| Coating layer | Carrier | | Initial | After 10 hours | After 100 hours |
| Example 12 | $MnO_2$ | $MnO_2$/clay = 50/50 | 5 | 89.9 | 86.8 | 81.7 |
| | | | 11 | 99.4 | 99.3 | 94.8 |
| | | | 20 | 99.8 | 99.8 | 98.8 |
| | | | 33 | 99.9 | 99.9 | 99.3 |
| | | | 45 | 99.9 | 99.9 | 99.5 |
| Example 13 | $MnO_2/Fe_2O_3$ | $MnO_2$/clay = 20/80 | 51 | 99.6 | 90.6 | 79.2 |
| Example 14 | $MnO_2/Fe_2O_3$ | $MnO_2$/clay = 20/80 | 38 | 99.9 | 99.9 | 99.5 |
| Example 15 | CuO | $MnO_2$/clay = 20/80 | 45 | 86.2 | 82.0 | 69.2 |
| Example 16 | $MnO_2$ | $MnO_2$/clay = 10/90 | 57 | 94.8 | 93.1 | 84.7 |

As apparent from Tables 1 and 2, any of the catalysts obtained in Examples 1 to 16 presents the high ozone decomposition rate and has good durability for a long time.

11

**Claims**

1. A catalyst comprising a carrier which contains at least 10% by weight of either an ozone adsorbing substance or a catalytically active substance (I) capable of decomposing ozone, and a layer of a catalytically active substance (II) capable of decomposing ozone, coated on the carrier with a thickness of 5-100 μm.

2. A catalyst according to claim 1, wherein the layer of catalytically active substance (II) has a thickness of 10-50 μm.

3. A catalyst according to claim 1, obtainable by dipping a honeycomb type carrier containing either an ozone adsorbing substance or a catalytically active substance (I) capable of decomposing ozone in a diluted or undiluted slurry which contains a catalytically active substance (II) capable of decomposing ozone, so that a layer of the catalytically active substance (II) is coated on the surface of the honeycomb type carrier with a thickness of 5 to 100 μm.

4. A method for decomposing ozone by contacting it with a catalyst according to any preceding claim.

**Patentansprüche**

1. Ein Katalysator, der einen Träger, welcher mindestens 10 Gewichtsprozent entweder einer Ozon adsorbierenden Substanz oder einer katalytisch aktiven Substanz (I) enthalt, welche fähig ist, Ozon zu zersetzen, und eine Schicht einer katalytisch aktiven Substanz (II) beinhaltet, die zum Zersetzen von Ozon fähig ist und auf den Träger mit einer Dicke von 5 bis 100 μm aufgebracht ist.

2. Ein Katalysator gemäß Anspruch 1, worin die Schicht der katalytisch aktiven Substanz (II) eine Dicke von 10 bis 50 μm hat.

3. Ein Katalysator gemäß Anspruch 1, der erhältlich ist, indem ein Träger vom Wabentyp, welcher entweder eine ozonadsorbierende Substanz oder eine katalytisch aktive zum Zersetzen von Ozon fähige Substanz (I) enthält, in eine verdünnte oder unverdünnte Aufschlämmung getaucht wird, welche eine katalytisch aktive zum Zersetzen von Ozon fähige Substanz (II) enthält, so daß eine Schicht der katalytisch aktiven Substanz (II) auf die Oberfläche des Trägers vom Wabentyp mit einer Dicke von 5 bis 100 μm aufgebracht wird.

4. Ein Verfahren zum Zersetzen von Ozon, indem es mit einem Katalysator gemäß irgend einem der vorangehenden Ansprüche in Kontakt gebracht wird.

**Revendications**

1. Catalyseur comprenant un support qui contient au moins 10 % en poids soit d'une substance adsorbant l'ozone soit d'une substance catalytiquement active (I) capable de décomposer l'ozone, et une couche d'une substance catalytiquement active (II) capable de décomposer l'ozone, appliquée sur le support suivant une épaisseur de 5-100 μm.

2. Catalyseur selon la revendication 1, dans lequel la couche de la substance catalytiquement active (II) a une épaisseur de 10-50 μm.

3. Catalyseur selon la revendication 1, pouvant être obtenu en immergeant un support du type nid d'abeilles contenant soit une substance adsorbant l'ozone soit une substance catalytiquement active (I) capable de décomposer l'ozone dans une bouillie diluée ou non diluée qui contient une substance catalytiquement active (II) capable de décomposer l'ozone, de sorte qu'une couche de la substance catalytiquement active (II) est appliquée à la surface du support du type nid d'abeilles suivant une épaisseur de 5 à 100 μm.

4. Procédé pour décomposer de l'ozone par sa mise en contact avec un catalyseur selon l'une quelconque des revendications précédentes.

# Fig.1

# Fig.2